# EUROPÄISCHE PATENTSCHRIFT

(11) **EP 1 321 670 B1**
(45) Veröffentlichungstag und Bekanntmachung des Hinweises auf die Patenterteilung: **19.09.2012**
(21) Anmeldenummer: 02026382.8
(22) Anmeldetag: 25.11.2002
(51) Int. Cl.: F03D 1/00

(54) **System zum Transport und zur Errichtung von Offshore-Windenergieanlagen**
System for the transport and installation of offshore wind turbines
Système de transport et d'installation d'éoliennes marines

(30) Priorität: 21.12.2001 DE 10163538
(43) Veröffentlichungstag der Anmeldung: 25.06.2003
(73) Patentinhaber: PLAMBECK, Norbert, 27472 Cuxhaven (DE)
(72) Erfinder: PLAMBECK, Norbert, 27472 Cuxhaven (DE)
(74) Vertreter: Manitz, Finsterwald & Partner GbR

(56) Entgegenhaltungen:
- WO-A-02/48547
- GB-A- 2 008 652
- US-A- 3 240 363
- US-A- 3 790 009
- JENSEN N M: "THE HORNS REV OFFSHORE PROJECT INSTALLATION AND TRANSPORTATION" EWEA SPECIAL TOPIC CONFERENCE ON OFFSHORE WIND ENERGY, XX, XX, 10. Dezember 2001 (2001-12-10), Seiten 1-4, XP001127019

## Beschreibung

Die Erfindung betrifft ein System zum Transport und zur seeseitigen Errichtung von landseitig zumindest im wesentlichen komplettierten Offshore-Windenergieanlagen.

Offshore-Windenergieanlagen kommt zunehmend größere Bedeutung zu, da zum einen die über See herrschenden Windverhältnisse konstanter als an Land sind und zum anderen die häufig kritisierten landschaftlichen Beeinträchtigungen durch Windparks sowie die von derartigen Windparks ausgehenden Geräuschentwicklungen auf See keine Rolle spielen.

Neben der zu gewährleistenden Tauglichkeit von Windenergieanlagen für den Einsatz auf hoher See sowie der erforderlichen Kabelverlegung stellen der Transport und die Errichtung von Offshore-Windenergieanlagen eine der großen Herausforderungen bei der Realisierung derartiger Vorhaben dar.

Das Transportieren und Montieren der Komponenten einer Offshore-Windenergieanlage ist aufgrund von meteorologischen Einflüssen auf See wesentlich schwieriger, zeitaufwändiger und dadurch teuerer als an Land. Die Errichtung des Turms, die Montage von Maschinenhaus, Nabe und Rotorblättern erfordert dabei neben einem hohen Personalaufwand vor allem auch einen hohen und kostspieligen Geräteaufwand, der besonders deshalb zum Tragen kommt, weil aufgrund der ständig schwankenden meteorologischen Bedingungen häufig eine lange Verweilzeit der Geräte, insbesondere der Kräne erforderlich ist, um die vollständige Montage sicherzustellen.

Wesentlich einfacher ist die Montage einer derartigen Windenergieanlage an Land, da an Land die erforderlichen Hebevorrichtungen in Form ausreichend dimensionierter Kräne stets einsatzbereit zur Verfügung stehen und auch der Transport der Einzelkomponenten sowie deren Handling ohne besondere Probleme und auch weitgehend unabhängig von Wetterbedingungen durchführbar ist.

GB 2 008 652 offenbart ein System zum Transport und zur seeseitigen Errichtung von landseitig zumindest im wesentlichen komplettierten Offshore-Anlagen mit einer seeseitigen Säule, einem Schiff und zwei mit dem Schiffskörper verbundenen Gleitbalken, entlang derer die Offshore-Anlage geschoben werden kann, bis sie auf der Säule aufliegt.

Aus der Gebrauchsmusterschrift 200 10 086 ist es bereits bekannt, komplette Offshore-Windenergieanlagen mittels eines speziell ausgebildeten Schwimmkrans an den seeseitigen Aufstellungsort zu transportierten. Diese Lösung ist jedoch aufgrund der erforderlichen Sonderkonstruktionen sehr aufwändig und setzt voraus, dass die Krananlage so ausgebildet ist, dass die ein hohes Gewicht aufweisende Offshore-Windenergieanlage durch Heb- und Schwenkvorgänge in der erforderlichen Weise umgesetzt werden kann. Da eine derartige aufwändige Krananlage jeweils nur vergleichsweise kurzzeitig im Einsatz ist und hohe, durch die Transportwege bedingte Totzeiten in Kauf genommen werden müssen, erweist sich diese bekannte Methode als ausgesprochen unwirtschaftlich.

Aufgabe der Erfindung ist es daher, ein System der eingangs angegebenen Art so auszugestalten, dass die Realisierung einer besonders wirtschaftlichen, logistisch optimalen Fertigungsstrategie ermöglicht wird.

Erfindungsgemäß wird diese Aufgabe nach der Erfindung im wesentlichen gelöst durch ein System, das sich auszeichnet durch
- wenigstens einen landseitig verfahrbaren Montagewagen mit einer Träger- und Hubvorrichtung für eine auf dem Montagewagen aufzubauende oder auf den Montagewagen zu übernehmende Offshore-Windenergieanlage,
- einen nach Art einer höhenverstellbaren Hubplattform aufgebauten Schwimmkörper zur Aufnahme und zum seeseitigen Transport wenigstens einer auf einem Montagewagen gehalterten Offshore-Windenergieanlage,
- zumindest einer auf der Hubplattform vorgesehenen Park- und Fixierposition für einen eine Offshore-Windenergieanlage tragenden Montagewagen, der kranlos zusammen mit der Offshore-Windenergieanlage über eine zwischen Land und Hubplattform positionierbare Überfahrhilfe auf die Hubplattform verfahrbar ist,
- sowie ein der jeweiligen Offshore-Windenergieanlage zugeordnetes, seeseitiges Arbeitsfundament zur Aufnahme der von der Hubplattform mittels des Montagewagens kranlos überführbaren und mittels der Hubvorrichtung auf das Arbeitsfundament absenkbaren Offshore-Windenergieanlage,
wobei der Montagewagen als Aufbauplattform für eine Windenergieanlage verwendbar ist.

Gegenstand der Erfindung ist ferner ein Verfahren zum Transport und zur seeseitigen Errichtung von landseitig zumindest im wesentlichen komplet-tierten Offshore-Windenergieanlagen mit den Merkmalen des Anspruchs 8.

Von besonderem Vorteil ist dabei, dass bereits die Herstellung der Offshore-Windenergieanlage auf dem Montagewagen erfolgen kann und es möglich ist, diesen Montagewagen, der vor allem durch Ballastwassertanks in der erforderlichen Weise stabilisiert werden kann, während des Herstellvorgangs zu jedem beliebigen Bereich eines Fertigungsareals verfahren werden kann, so dass Turmmontage, Gondelinstallation, Rotormontage, Trafoeinbau, Verkabelung und dergleichen jeweils unter vorgebbaren optimalen Bedingungen erfolgen kann.

Aufgrund der Integration einer Träger- und Hubvorrichtung in den Montagewagen, die geeignet ist, die gesamte Windenergieanlage zu tragen, kann zum einen eine fertige Anlage auf einem Testfundament oder auch einem landseitigen Arbeitsfundament abgesetzt und dort befestigt werden, und zum anderen ermöglicht es dieser Montagewagen, eine komplett montierte Windenergieanlage unter Vermeidung von nur mit schweren Kränen durchführbaren Umsetzvorgängen direkt auf die als Schwimmkörper ausgebildete Hubplattform zu überführen und schließlich auch noch das wiederum kranlose Absetzen auf dem seeseitigen Arbeitsfundament zu gewährleisten.

Während die Windenergieanlage bereits an Land auf einwandfreien Betrieb getestet werden kann, ermöglicht die unkomplizierte Errichtung der stehend oder liegend transportierbaren Gesamtanlage auf dem seeseitigen Arbeitsfundament eine schnelle Inbetriebnahme. Dies bedeutet, dass die Windenergieanlage, die auch schon an Land in Betrieb genommen werden kann, nur kurzzeitig während des Seetransports außer Betrieb sein muss, wobei es prinzipiell sogar möglich ist, die Anlage auch in aufrechter Position auf der Hubplattform zu betreiben.

Nachdem es - wie soeben erwähnt - problemfrei möglich ist, die jeweilige Windenergieanlage bereits an Land auf einwandfreie Funktion zu testen und es in der Praxis auch keine Schwierigkeiten bereitet, mittels der erwähnten Montagewägen drei und mehr Windenergieanlagen auf einer gemeinsamen Hubplattform an den seeseitigen Einsatzort zu transportieren, kann eine schnelle Inbetriebnahme auch einer größeren Anzahl von Offshore-Windenergieanlagen sichergestellt werden.

Von besonderer Bedeutung ist ferner, dass aufgrund des durch die Erfindung bereitgestellten einfachen und schnellen Transportsystems das mit einem Eigenantrieb ausgestattet oder als Schleppeinheit ausgeführt sein kann, auch defekte Windenergieanlagen eines Offshore-Windparks wirtschaftlich dann noch zur Reparatur an Land gebracht werden können, wenn eine Reparatur auf See technisch im Prinzip zwar möglich, aufgrund von nicht vorhersehbaren Schlechtwetterphasen aber zeitaufwändig und teuer werden kann. Auf diese Weise kann der Gesamtwirkungsgrad einer Offshore-Windenergieanlage auf einem hohen Wert gehalten werden.

Weitere vorteilhafte Ausgestaltungen der Erfindung sind in den Unteransprüchen angegeben.

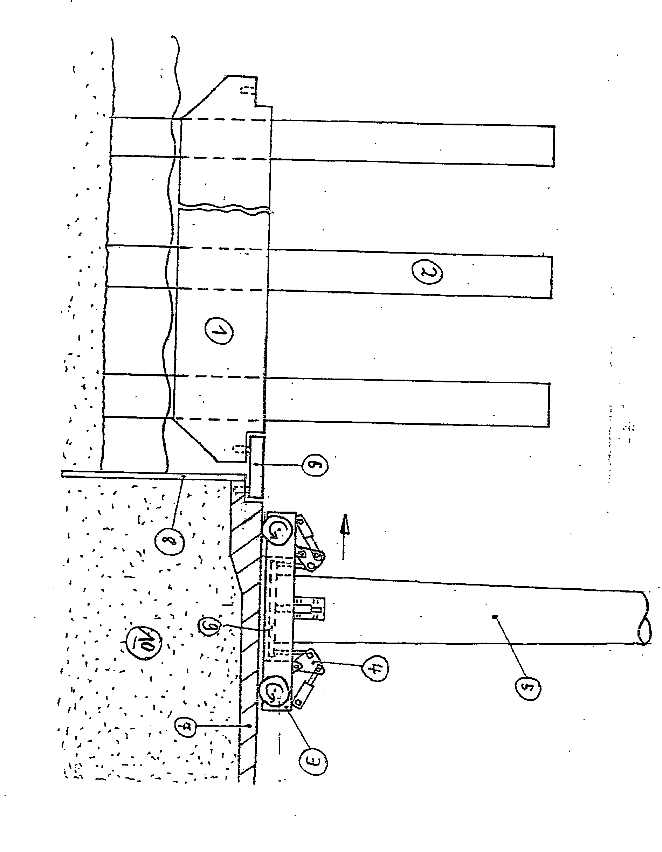

Ein Ausführungsbeispiel der Erfindung wird nachfolgend unter Bezugnahme auf die Zeichnung erläutert, deren einzige Figur in schematischer Weise den Vorgang der Überführung einer auf einem Montagewagen gehalterten Offshore-Windenergieanlage auf eine Hubplattform zeigt.

Nach der Zeichnung ist eine Hubplattform 1 vor einer Verschiffungspier 10 positioniert, und zwar mittels mehrerer vertikal verfahrbarer Hubbeine 2. Die Hubplattform 1 ist schwimmfähig ausgebildet, sie kann einen Eigenantrieb besitzen, jedoch auch in Form einer Schleppeinheit verwendet werden.

Auf der Hubplattform 1 ist vorzugsweise eine Mehrzahl von Park- und Fixierpositionen für Montagewägen 3 vorgesehen, die an Land verfahrbar ausgebildet und mit einer Hubeinrichtung 4 versehen sind, die geeignet ist eine komplett montierte Windenergieanlage 5 in eindeutig fixierter Weise zu tragen.

In den Hubwagen 3 sind in der Zeichnung nicht dargestellte, ausreichend groß dimensionierte Ballasttanks zur Gewichtserhöhung vorgesehen, die sicherstellen, dass keine Kippgefahren entstehen können.

Der Montagewagen 3 ist so ausgebildet, dass auf diesem Montagewagen 3 bei entsprechender Fixierung eines Basisflansches des Turms der Windenergieanlage 5 ein kompletter Aufbau der Windenergieanlage auf dem Montagewagen erfolgen kann. Zum Zwecke der Überführung einer zwischenzeitlich bereits in Betrieb genommenen Windenergieanlage auf die Hubplattform kann eine solche Anlage mittels der Hubvorrichtung 4 des Montagewagens 3 aufgenommen, auf dem Hubwagen 3 fixiert und dann auf die Hubplattform 1 überführt werden.

Diese Überführung erfolgt dabei unter Verwendung einer Überfahrhilfe zwischen Pier und Hubplattform 1, wobei durch ein gezieltes Anheben oder Absenken der Hubplattform 1 über die Hubbeine 2 ein im wesentlichen ebener Übergang zwischen Pier 10 und Hubplattform 1 erreicht werden kann.

Die dabei verwendete Überfahrhilfe 6 kann in analoger Weise wieder zum Einsatz kommen, wenn seeseitig die Windenergieanlage 5 auf einem Arbeitsfundament abgesetzt und dort befestigt werden muss.

Die Verbindungs- bzw. Kupplungseinheit zwischen der jeweiligen Windenergieanlage und einer auf dem Montagewagen 3 vorgesehenen Aufnahme bzw. einem seeseitigen Arbeitsfundament wird bevorzugt standardisiert ausgeführt, wozu insbesondere nicht nur eine Kraftschluss- sondern auch eine Formschlussverbindung vorgesehen ist. Auf diese Weise ergibt sich schon während der Übernahme- bzw. Übergabevorgänge eine stabilisierende Halterung des Turms der Windenergieanlage.

Nachfolgend soll kurz der Verfahrensablauf zur Übernahme einer Offshore-Windenergieanlage für den Transport auf einer Hubplattform sowie die Übergabe der Offshore-Windenergieanlage auf ein seeseitiges Arbeitsfundament geschildert werden.

Dazu wird zunächst die Hubplattform 1 vor der Verschiffungspier 10 positioniert und die Hubplattform 1 mittels der Hubbeine 4 in ihrer Höhe so eingestellt, dass sich das Plattformdeck auf dem Niveau der Verschiffungspier befindet. Anschließend werden die Überfahrhilfen 6 in entsprechende Aufnahmen eingehängt, so dass ein eine bevorzugt bereits vollständig montierte Offshore-Windenergieanlage tragender Montagewagen 3 auf das Deck der Hubplattform 1 gefahren werden kann. Die Hubplattform 1 ist bevorzugt zur Aufnahme einer Mehrzahl derartiger Montagewägen ausgebildet und diese Montagewägen können in den entsprechend vorgesehenen Positionier- und Fixierpositionen auf der Hubplattform so befestigt werden, dass jegliche unerwünschte Bewegung sowie jegliche Kippbewegung verhindert wird.

Nach einem Aushängen der Überfahrhilfen 6 wird die Hubplattform bis zur vollständigen Schwimmfähigkeit abgesenkt, so dass dann die seefest vorbereitete Hubplattform entweder über Eigenantrieb oder mittels eines Schleppvorgangs zur Lokation im jeweiligen seeseitigen Windpark transportiert werden kann.

Nach Ankunft vor der betreffenden seeseitigen Lokation wird die Hubplattform wiederum vor dem betreffenden Arbeitsfundament positioniert und über die Hubbeine 2 so angehoben, dass sich das Plattformdeck auf dem Niveau der Fundamentoberkante befindet. Nach dem Einhängen der entsprechenden Überfahrhilfen 6 kann die sich noch auf dem Montagewagen 3 befindende Windenergieanlage 5 beispielsweise über geeignete Verfahrvorrichtungen (Zug- oder Selbstfahrer) über den Fundamentflansch gebracht und dort positionsgenau mittels der Hubvorrichtung 4 abgesetzt und verschraubt werden.

Nach dem Lösen noch vorhandener Verbindungen zwischen dem Montagewagen 3 und der Windenergieanlage können die Ballasträume des Montagewagens gelenzt werden, und es kann ein Rückführen des Montagewagens auf die Hubplattform in die dort vorgesehene Parkposition erfolgen. Die Überfahrhilfen werden dann wieder ausgehängt und es kann eine Ballastwasseraufnahme durch die Hubplattform zum Zwecke des Durchtrimmens erfolgen. Nach dem Absenken der Hubplattform 1 bis zur vollständigen Schwimmfähigkeit kann die nächste Lokation zur Übergabe der nächsten Windenergieanlage angefahren werden.

Ist die Hubplattform vollständig entladen, kann eine Rückführung zur Verschiffungspier erfolgen, wobei es beispielsweise durchaus vorkommen kann, dass bei diesem Rückführvorgang eine defekte Anlage mitgenommen und dann wiederum über den entsprechenden Montagewagen an Land zur Reparatur abgesetzt wird.

### Bezugszeichenliste

- 1: Hubplattform
- 2: Hubbein
- 3: Montagewagen
- 4: Träger- und Hubvorrichtung
- 5: Offshore-Windenergieanlage
- 6: Überfahrhilfe
- 7: Schwerlast-Oberflächenbefestigung
- 8: Spundwand
- 9: Basisflansch
- 10: Pier

## Patentansprüche

1. System zum Transport und zur seeseitigen Errichtung von landseitig zumindest im wesentlichen komplettierten Offshore-Windenergieanlagen,
**gekennzeichnet durch**
- wenigstens einen landseitig verfahrbaren Montagewagen (3) mit einer Träger- und Hubvorrichtung (4) für eine auf dem Montagewagen aufzubauende oder auf den Montagewagen (3) zu übernehmende Offshore-Windenergieanlage (5),
- einen nach Art einer höhenverstellbaren Hubplattform (1) aufgebauten Schwimmkörper zur Aufnahme und zum seeseitigen Transport wenigstens einer auf einem Montagewagen (3) gehalterten Offshore-Windenergieanlage (5),
- zumindest einer auf der Hubplattform (1) vorgesehenen Park- und Fixierposition für einen eine Offshore-Windenergieanlage (5) tragenden Montagewagen (3), der kranlos zusammen mit der Offshore-Windenergieanlage (5) über eine zwischen Land und Hubplattform (1) positionierbare Überfahrhilfe (6) auf die Hubplattform (1) verfahrbar ist,
- sowie ein der jeweiligen Offshore-Windenergieanlage (5) zugeordnetes, seeseitiges Arbeitsfundament zur Aufnahme der von der Hubplattform (1) mittels des Montagewagens (3) kranlos überführbaren und mittels der Hubvorrichtung (4) auf das Arbeitsfundament absenkbaren Offshore-Windenergieanlage (5), wobei der Montagewagen (3) als Aufbauplattform für eine Offshore-Windenergieanlage (5) verwendbar ist.

2. System nach Anspruch 1,
**dadurch gekennzeichnet,**
**dass** die Offshore-Windenergieanlage (5) mit dem seeseitigen Arbeitsfundament und einem im Montagewagen (3) vorgesehenen Träger- und Transportfundament über einheitliche, vorzugsweise ineinanderschiebbare Formschluss-Kupplungselemente verbindbar ist.

3. System nach einem der vorhergehenden Ansprüche,
**dadurch gekennzeichnet,**
**dass** der Montagewagen (3) mit integrierten Ballasttanks zur Gewichtserhöhung ausgestattet ist.

4. System nach einem der vorhergehenden Ansprüche,
**dadurch gekennzeichnet,**
**dass** der Montagewagen (3) eine einseitig offene, im wesentlichen U-förmige Grundstruktur zur Ermöglichung von Ein- und Ausfahrvorgängen bezüglich einer Offshore-Windenergieanlage (5) aufweist.

5. System nach einem der vorhergehenden Ansprüche,
**dadurch gekennzeichnet,**
**dass** die Träger- und Hubvorrichtung (4) des Montagewagens (3) mit dem Basisflansch (9) einer Offshore-Windenergieanlage (5) verbindbar ist.

6. System nach einem der vorhergehenden Ansprüche,
**dadurch gekennzeichnet,**
**dass** der die Hubplattform (1) umfassende Schwimmkörper eine Mehrzahl von vertikal verstellbaren Hubbeinen (2) aufweist, über die in der Übernahme- oder Übergabeposition für die Offshore-Windenergieanlage (5) eine im wesentlichen horizontale Lage der Überfahrhilfe (6) vorgebbar ist.

7. System nach einem der vorhergehenden Ansprüche,
**dadurch gekennzeichnet,**
**dass** der die Hubplattform (1) umfassende Schwimmkörper zur Aufnahme von Ballastwasser zu Ballastierungs- und Trimmzwecken ausgebildet ist.

8. Verfahren zum Transport und zur seeseitigen Errichtung von landseitig zumindest im wesentlichen komplettierten Offshore-Windenergieanlagen (5) unter Verwendung einer schwimmfähigen Hubplattform (1) und wenigstens eines landseitig verfahrbaren Montagewagens (3) mit einer Träger- und Hubvorrichtung (4) für eine auf dem Montagewagen (3) aufzubauende oder auf den Montagewagen (3) zu übernehmende Offshore-Windenergieanlage (5),
bei dem
- die Offshore-Windenergieanlage (5) unter Verwendung des Montagewagens (3) als Aufbauplattform landseitig aufgebaut wird,
- eine Überfahrhilfe (6) zwischen Land und Hubplattform (1) positioniert wird,
- der Montagewagen (3) zusammen mit der Offshore-Windenergieanlage (5) über die Überfahrhilfe (6) auf die Hubplattform (1) verfahren wird,
- der Montagewagen (3) in einer auf der Hubplattform (1) vorgesehenen Park- und Fixierposition befestigt wird,
- die Hubplattform (1) mit der Offshore-Windenergieanlage (5) schwimmend zu einem seeseitigen Arbeitsfundament transportiert wird, und
- die Offshore-Windenergieanlage (5) mittels des Montagewagens (3) kranlos von der Hubplattform (1) auf das seeseitige Arbeitsfundament überführt wird und mittels der Träger- und Hubvorrichtung (4) auf das seeseitige Arbeitsfundament abgesenkt wird.

9. Verfahren nach Anspruch 8
**dadurch gekennzeichnet,**
**dass** das Niveau der Hubplattform (1) vor dem Überführen der Offshore-Windenergieanlage (5) auf die Hubplattform (1) angepasst wird.

10. Verfahren nach Anspruch 8 oder 9
**dadurch gekennzeichnet,**
**dass** die Hubplattform (1) nach dem Überführen der Offshore-Windenergieanlage (5) auf die Hubplattform (1) bis zur vollständigen Schwimmfähigkeit abgesenkt wird.

## Claims

1. A system for the transport and for the offshore installation of offshore wind turbines completed at least substantially onshore, **characterised by**
- at least one assembly dolly (3) movable onshore and having a carrier and lifting apparatus (4) for an offshore wind turbine (5) to be erected on the assembly dolly or to be taken over by the assembly dolly (3);
- a barge designed in the manner of a vertically adjustable lifting platform (1) for the receiving of and for the offshore transport of at least one offshore wind turbine (5) held on an assembly dolly (3);
- at least one parking and fixing position provided on the lifting platform (1) for an assembly dolly (3) which carries an offshore wind turbine (5) and which can be moved without a crane together with the offshore wind turbine (5) onto the lifting platform (1) via a transfer aid positionable between the land and the lifting platform (1);
- as well as an offshore work foundation associated with the respective offshore wind turbine (5) for receiving the offshore wind turbine (5) which can be transferred without a crane from the lifting platform (1) by means of the assembly dolly (3) and which can be lowered onto the work foundation by means of the lifting apparatus (4), wherein the assembly dolly (3) can be used as a construction platform for an offshore wind turbine (5).

2. A system in accordance with claim 1,
**characterised in that**
the offshore wind turbine (5) can be connected to the offshore work foundation and to a carrier and transport foundation provided in the assembly dolly (3) via uniform form-fitted coupling elements which can preferably be pushed into one another.

3. A system in accordance with any one of the preceding claims,
**characterised in that**
the assembly dolly (3) is equipped with integrated ballast tanks to increase the weight.

4. A system in accordance with any one of the preceding claims,
**characterised in that**
the assembly dolly (3) has a base structure which is open at one side and which is essentially of U shape for allowing moving in and out processes with respect to an offshore wind turbine (5).

5. A system in accordance with any one of the preceding claims,
**characterised in that**
the carrier and lifting apparatus (4) of the assembly dolly (3) can be connected to the base flange (9) of an offshore wind turbine (5).

6. A system in accordance with any one of the preceding claims,
**characterised in that**
the barge comprising the lifting platform (1) has a plurality of vertically adjustable lifting legs (2) via which a substantially horizontal position of the transfer aid (6) can be predefined in the transfer or takeover position for the offshore wind turbine (5).

7. A system in accordance with any one of the preceding claims,
**characterised in that**
the barge comprising the lifting platform (1) is configured for the reception of ballast water for ballast and trim purposes.

8. A method for the transport and for the offshore installation of offshore wind plants (5) completed at least substantially onshore using a floatable lifting platform (1) and at least one assembly dolly (3) which can be moved onshore and having a carrying and lifting apparatus (4) for an offshore wind plant (5) to be erected on the assembly dolly (3) or to be taken over by the assembly dolly (3), wherein
- the offshore wind plant (5) is erected as an installation platform onshore using the assembly dolly (3);
- a transfer aid (6) is positioned between the land and the lifting platform (1);
- the assembly dolly (3) is moved together with the offshore wind plant (5) onto the lifting platform (1) via the transfer aid (6);
- the assembly dolly (3) is fastened in a parking and fixing position provided on the lifting platform (1);
- the lifting platform (1) is transported with the offshore wind turbine (5) in a floating manner to an offshore work foundation; and
- the offshore wind turbine (5) is transferred from the lifting platform (1) without a crane by means of the assembly dolly (3) onto the offshore work foundation and is lowered onto the offshore work foundation by means of the carrying and lifting apparatus (4).

9. A method in accordance with claim 8,
**characterised in that**
the level of the lifting platform (1) is adapted before the transfer of the wind turbine (5) onto the lifting platform (1).

10. A method in accordance with claim 8 or claim 9,
**characterised in that**
the lifting platform (1) is lowered down to complete floating capability after the transfer of the offshore wind plant (5) onto the lifting platform (1).

## Revendications

1. Système pour le transport et l'érection en mer d'installations éoliennes offshore au moins essentiellement complétées à terre, **caractérisé par**
- au moins un chariot de montage (3) déplaçable à terre avec un dispositif de support et de levage (4) pour une installation éolienne offshore (5) à assembler sur le chariot de montage ou à reprendre sur le chariot de montage (3),
- un corps flottant réalisé à la manière d'une plate-forme de levage (1) réglable en hauteur pour la réception et pour le transport en mer d'au moins une installation éolienne offshore (5) retenue sur un chariot de montage (3),
- au moins une position de stationnement et de fixation, prévue sur la plate-forme de levage (1) pour un chariot de montage (3) portant une installation éolienne offshore (5), lequel est déplaçable sans utiliser de grue jusque sur la plate-forme de levage (1), conjointement avec l'installation éolienne offshore (5), au moyen d'un accessoire de transfert (6) susceptible d'être positionné entre la terre et la plate-forme de levage (1),
- ainsi qu'une fondation de travail en mer, associée à l'installation éolienne offshore (5) respective pour la réception de l'installation éolienne offshore (5) qui peut être transférée sans utiliser de grue depuis la plate-forme de levage (1) au moyen du chariot de montage (3) et qui peut être abaissée sur la fondation de travail au moyen du dispositif de levage (4), dans lequel le chariot de montage (3) est utilisable à titre de plate-forme d'assemblage pour une installation éolienne offshore (5).

2. Système selon la revendication 1,
**caractérisé en ce que** l'installation éolienne offshore (5) est susceptible d'être reliée à la fondation de travail en mer et à une fondation de support et de transport prévue dans le chariot de montage (3), via des éléments de couplage unitaires à coopération de formes, de préférence emboîtable les uns dans les autres.

3. Système selon l'une des revendications précédentes,
**caractérisé en ce que** le chariot de montage (3) est équipé de réservoirs de ballast intégrés pour l'augmentation du poids.

4. Système selon l'une des revendications précédentes,
**caractérisé en ce que** le chariot de montage (3) présente une structure de base ouverte sur un côté, essentiellement en forme de U, pour permettre des opérations d'entrée et de sortie vis-à-vis d'une installation éolienne offshore (5).

5. Système selon l'une des revendications précédentes,
**caractérisé en ce que** le dispositif de support et de levage (4) du chariot de montage (3) est susceptible d'être relié à la bride de base (9) d'une installation éolienne offshore (5).

6. Système selon l'une des revendications précédentes,
**caractérisé en ce que** le corps flottant qui englobe la plate-forme de levage (1) comprend une pluralité de jambes de levage (2) déplaçables verticalement, via lesquelles peut être imposée une position sensiblement horizontale de l'accessoire de transfert (6), dans la position de reprise ou de transfert pour l'installation éolienne offshore (5).

7. Système selon l'une des revendications précédentes,
**caractérisé en ce que** le corps flottant qui englobe la plate-forme de levage (1) est réalisé en vue de la réception d'eau de ballast à des fins d'équilibrage et de réglage d'assiette.

8. Procédé pour le transport et pour l'érection en mer d'installations éoliennes offshore (5) au moins essentiellement complétées à terre, en utilisant une plate-forme de levage (1) capable de flotter et au moins un chariot de montage (3) déplaçable à terre avec un dispositif de support et de levage (4) pour une installation éolienne offshore (3) à assembler sur le chariot de montage (3) ou à reprendre sur le chariot de montage (3), dans lequel
- l'installation éolienne offshore (5) est assemblée à terre en utilisant le chariot de montage (3) comme plate-forme d'assemblage,
- un accessoire de transfert (6) est positionné entre la terre et la plate-forme de levage (1),
- le chariot de montage (3) est déplacé jusque sur la plate-forme de levage (1) conjointement avec l'installation éolienne offshore (5) au moyen de l'accessoire de transfert (6),
- le chariot de montage (3) est fixé sur une position de stationnement et de fixation prévue sur la plate-forme de levage (1),
- la plate-forme de levage (1) et transportée avec l'installation éolienne offshore (5) en flottant jusqu'à une fondation de travail en mer, et
- l'installation éolienne offshore (5) est transférée au moyen du chariot de montage (3) et sans utiliser de grue depuis la plate-forme de levage (1) vers la fondation de travail en mer, et est abaissée sur la fondation de travail en mer au moyen du dispositif de support et de levage (4).

9. Procédé selon la revendication 8,
**caractérisé en ce que** le niveau de la plate-forme de levage (1) est ajusté avant le transfert de l'installation éolienne offshore (5) vers la plate-forme de lavage (1).

10. Procédé selon la revendication 8 ou 9,
**caractérisé en ce que**, après le transfert de l'installation éolienne offshore (5) vers la plate-forme de levage (1), la plate-forme de levage (1) est abaissée jusqu'à flottabilité totale.
